# EUROPEAN PATENT APPLICATION

(11) **EP 4 530 126 A1**
(43) Date of publication of application: **02.04.2025**
(21) Application number: 23845144.7
(22) Date of filing: 20.06.2023
(51) Int. Cl.: B60N 2/56

(54) **CHAIR BACK VENTILATION APPARATUS AND SAFETY SEAT**

(30) Priority: 27.07.2022 CN 202222014323 U
(71) Applicant: Ningbo Baby First Baby Products Co., Ltd., Ningbo, Zhejiang 315400 (CN)
(72) Inventor: ZHOU, Xiaolin, Ningbo, Zhejiang 315400 (CN); YANG, Gang, Ningbo, Zhejiang 315400 (CN); GUO, Yi, Ningbo, Zhejiang 315400 (CN)
(74) Representative: Ipside
(86) International application number: PCT/CN2023/101235
(87) International publication number: WO 2024/021931

(57) **Abstract**

This disclosure provides a backrest ventilation device and safety seat, relating to the field of safety seat technology. The backrest ventilation device provided by this disclosure includes: an air guide assembly and a cushion cover, with the air guide assembly installed on the cushion cover, which can be detachably connected to the backrest and/or headrest through the cushion cover. The cushion cover can be installed or removed from the backrest and headrest according to usage requirements. The air guide assembly installed on the cushion cover provides ventilation and heat dissipation for the passenger's back, avoiding the idleness of air guide assemblies fixed on the backrest and headrest. As the child grows and the headrest height is adjusted, the air guide assembly can be correspondingly adjusted to the most suitable position, improving the riding experience and adapting to different models of backrests and headrests, thus reducing the production cost of the seat.

## Description

### Technical Field

This disclosure relates to the field of safety seat technology, particularly to a backrest ventilation device and safety seat.

### Background Technology

Ventilation can be achieved by installing fans inside the seat backrest or headrest, thereby improving the heat dissipation efficiency of the passenger's back. Since the fan on the backrest is only needed when the ambient temperature is high, installing the fan inside the seat backrest or headrest would not only result in the fan being idle but also increase the production cost of the seat. As children grow taller, the fixed position of the fan on the seat cannot be adjusted accordingly, leading to deterioration in ventilation effect and user experience. Furthermore, ventilation devices with specific structural shapes are only suitable for installation on corresponding seat backrests or headrests. Developing separate ventilation devices for different seat backrests and headrests increases the production cost of backrest ventilation devices.

### Summary of the Disclosure

The purpose of this disclosure is to provide a backrest ventilation device and safety seat to alleviate the technical problem of being unable to optionally equip air guide assemblies on backrests and headrests according to usage requirements.

In the first aspect, the backrest ventilation device provided by this disclosure includes: an air guide assembly and a cushion cover, with the air guide assembly installed on the cushion cover;

The cushion cover is used for detachable connection to the backrest and/or headrest.

In combination with the first aspect, this disclosure provides a first possible embodiment of the first aspect, wherein the cushion cover is provided with a cover cavity, the cover cavity has an opening, and the air guide assembly is installed inside the cover cavity.

In combination with the first aspect, this disclosure provides a second possible embodiment of the first aspect, wherein the air guide assembly is sewn inside the cushion cover.

In combination with the first aspect, this disclosure provides a third possible embodiment of the first aspect, wherein a fitting piece is connected to the cushion cover, and the fitting piece is connected to the air guide assembly.

In combination with the third possible embodiment of the first aspect, this disclosure provides a fourth possible embodiment of the first aspect, wherein the fitting piece includes hook and loop fasteners or adhesive tape.

In combination with the first aspect, this disclosure provides a fifth possible embodiment of the first aspect, wherein a buckle component is installed on the cushion cover, and the buckle component is snap-fitted with the air guide assembly.

In combination with the first aspect, this disclosure provides a sixth possible embodiment of the first aspect, wherein the air guide assembly includes: a fixing frame and a fan, the fan is installed on the fixing frame, and the fixing frame is installed on the cushion cover.

In combination with the sixth possible embodiment of the first aspect, this disclosure provides a seventh possible embodiment of the first aspect, wherein the fixing frame is equipped with a power supply, the power supply is connected to the fan, and a switch component is provided between the power supply and the fan.

In combination with the first aspect, this disclosure provides an eighth possible embodiment of the first aspect, wherein the cushion cover includes: a headrest cover and a backrest cover connected to the headrest cover, and the air guide assembly is installed on the backrest cover.

In the second aspect, the safety seat provided by this disclosure includes: a seat body and the backrest ventilation device described in the first aspect, with the cushion cover connected to the seat body.

The embodiments of this disclosure bring the following beneficial effects: By installing the air guide assembly on the cushion cover, which can be detachably connected to the backrest and/or headrest, the cushion cover can be installed or removed from the backrest and headrest according to usage requirements. The air guide assembly installed on the cushion cover provides ventilation and heat dissipation for the passenger's back, not only avoiding the idleness of air guide assemblies fixed on the backrest and headrest but also adapting to different models of backrests and headrests, thus reducing the production cost of the seat. Furthermore, as the child grows and the headrest height is adjusted, the air guide assembly can be correspondingly moved to a suitable height position, improving the riding experience.

To make the above objectives, features, and advantages of this disclosure more apparent and easier to understand, preferred embodiments will be described in detail below with reference to the accompanying drawings.

### Brief Description of the Drawings

To more clearly explain the technical solutions in the specific implementation methods or related technologies of this disclosure, a brief introduction will be given to the drawings needed in the description of specific implementation methods or related technologies. Obviously, the drawings described below are some implementations of this disclosure. For ordinary technicians in the field, without creative labor, other drawings can also be obtained based on these drawings.
Figure 1 is an exploded view of a backrest ventilation device and headrest provided by an embodiment of this disclosure;
Figure 2 is an exploded view of another backrest ventilation device and headrest provided by an embodiment of this disclosure;
Figure 3 is a schematic diagram of a cushion cover in a half-open state provided by an embodiment of this disclosure;
Figure 4 is a schematic diagram of a cushion cover with the air guide assembly sewn inside, provided by an embodiment of this disclosure;
Figure 5 is a schematic diagram of a cushion cover with a fitting piece, provided by an embodiment of this disclosure;
Figure 6 is a schematic diagram of a cushion cover with a buckle component, provided by an embodiment of this disclosure;
Figure 7 is a schematic diagram of the air guide assembly of the backrest ventilation device provided by an embodiment of this disclosure.

Reference numerals: 100-air guide assembly; 110-fixing frame; 120-fan; 130-power supply; 140-charging interface; 150-switch component; 200-cushion cover; 201-opening; 202-fitting piece; 203-buckle component; 210-headrest cover; 220-backrest cover; 300-headrest.

### Detailed Description of the Embodiments

The technical solutions of this disclosure will be described clearly and completely in conjunction with the drawings. Obviously, the described embodiments are only a part of the embodiments of this disclosure, not all of them. Based on the embodiments in this disclosure, all other embodiments obtained by ordinary technicians in the field without creative labor are within the protection scope of this disclosure.

In the description of this disclosure, it needs to be explained that terms such as "center", "up", "down", "left", "right", "vertical", "horizontal", "inner", "outer" indicating orientation or positional relationships are based on the orientation or positional relationships shown in the drawings, only for the convenience of describing this disclosure and simplifying the description, and do not indicate or imply that the referred device or element must have a specific orientation, be constructed and operated in a specific orientation. Therefore, they should not be understood as limitations to this disclosure. In addition, terms "first", "second", "third" are only used for descriptive purposes and cannot be understood as indicating or implying relative importance. Physical quantities in formulas, unless separately marked, should be understood as basic quantities in the International System of Units, or derived quantities obtained from basic quantities through mathematical operations such as multiplication, division, differentiation or integration.

In the description of this disclosure, it needs to be explained that, unless otherwise explicitly stipulated and limited, terms such as "install", "connect", "connection" should be understood broadly. For example, it can be a fixed connection, or a detachable connection, or an integral connection; it can be a mechanical connection, or an electrical connection; it can be a direct connection, or an indirect connection through an intermediate medium, or an internal communication between two elements. For ordinary technicians in the field, the specific meaning of the above terms in this disclosure can be understood according to specific situations.

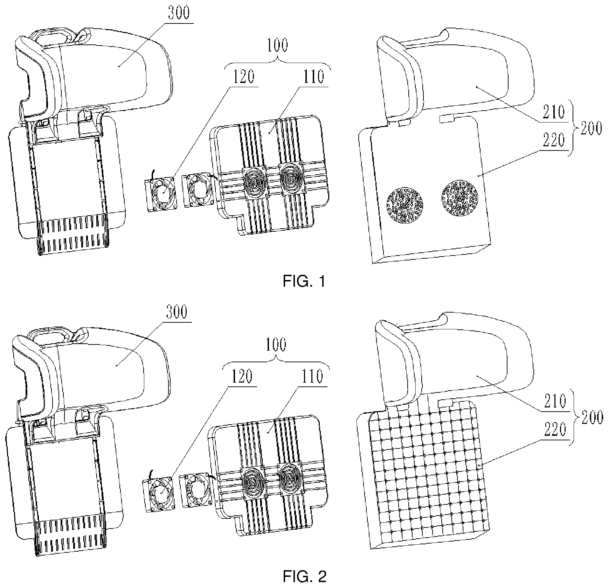

As shown in Figures 1 and 2, the backrest ventilation device provided by the embodiment of this disclosure includes: an air guide assembly 100 and a cushion cover 200, with the air guide assembly 100 installed on the cushion cover 200; the cushion cover 200 is used for detachable connection to the backrest and/or headrest 300.

In this embodiment, the cushion cover 200 can be connected to the backrest or headrest 300, or both the backrest and headrest 300 are connected to the cushion cover 200. The air guide assembly 100 installed on the cushion cover 200 provides ventilation and heat dissipation for the passenger's back. When back ventilation is not needed, the cushion cover 200 can be removed from the backrest or headrest 300, not only avoiding the idleness of air guide assemblies 100 fixed on the backrest and headrest 300, but also making the cushion cover 200 easy to install on different models of backrests and headrests 300, thus reducing the production cost of the seat.

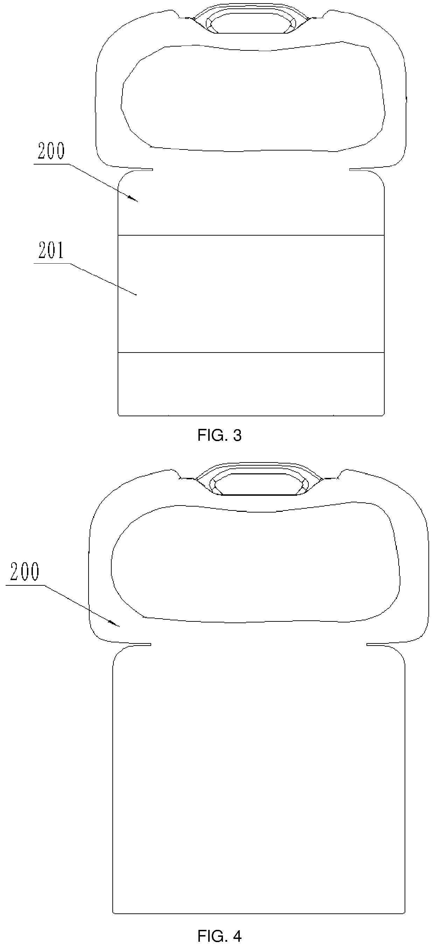

As shown in Figures 1, 2, and 3, in this embodiment of the disclosure, the cushion cover 200 is provided with a cover cavity, the cover cavity has an opening 201, and the air guide assembly 100 is installed inside the cover cavity through the opening 201.

As shown in Figures 1, 2, and 4, the air guide assembly 100 is sewn inside the cushion cover 200. During processing, a fabric cover structure is used as the cushion cover 200, with a reserved opening. The air guide assembly 100 is installed inside the cushion cover 200 through the opening, and is enclosed inside the cushion cover 200 by sewing.

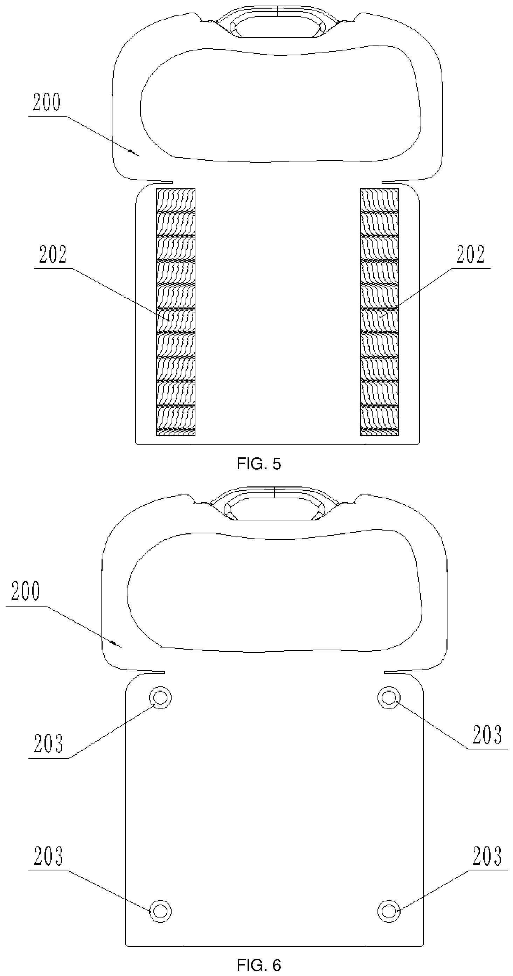

As shown in Figures 1, 2, and 5, a fitting piece 202 is connected to the cushion cover 200, and the fitting piece 202 is connected to the air guide assembly 100. The fitting piece 202 is located on the back of the cushion cover 200, connecting the air guide assembly 100 through the fitting piece 202. The cushion cover 200 is padded between the passenger's back and the air guide assembly 100, improving passenger comfort through the elastic filling inside the cushion cover 200.

In one embodiment, the fitting piece 202 includes hook and loop fasteners, configured as either the loop side or the hook side, with the air guide assembly 100 connected to the other side. The air guide assembly 100 is connected to the cushion cover 200 by attaching the loop side to the hook side.

In another embodiment, the fitting piece 202 includes adhesive tape, with the air guide assembly 100 adhered to the adhesive tape, thus connecting the air guide assembly 100 to the cushion cover 200.

As shown in Figures 1, 2, and 6, a buckle component 203 is installed on the cushion cover 200, and the buckle component 203 is snap-fitted with the air guide assembly 100.

Specifically, multiple buckle components 203 are installed on the cushion cover 200, with these buckle components 203 spaced apart and arranged in a matrix pattern on the surface of the cushion cover 200. The air guide assembly 100 is connected to the cushion cover 200 by snapping into these multiple buckle components 203.

As shown in Figures 1, 2, and 7, the air guide assembly 100 includes: a fixing frame 110 and a fan 120, with the fan 120 installed on the fixing frame 110, and the fixing frame 110 installed on the cushion cover 200.

Specifically, the fixing frame 110 is equipped with an air duct, and the fan 120 is installed on the fixing frame 110. The air duct ensures that the fan 120 can smoothly circulate air in a direction perpendicular to the surface of the cushion cover 200.

As shown in Figure 1, the cushion cover 200 is provided with ventilation mesh holes corresponding to the position of the fan 120. By increasing the number of fans 120 installed on the fixing frame 110, the ventilation efficiency of the air guide assembly 100 can be improved.

As shown in Figure 2, the cushion cover 200 is made of mesh fabric, ensuring that the airflow driven by the fan 120 can smoothly pass through the cushion cover 200.

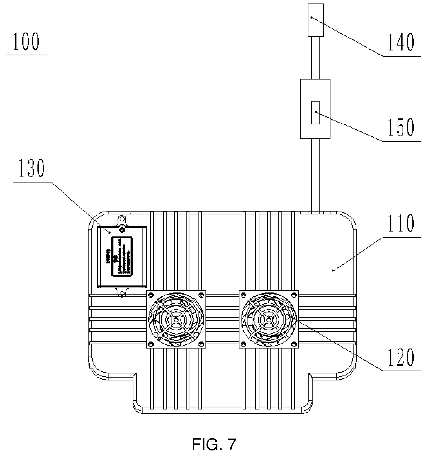

As shown in Figure 7, the fixing frame 110 is equipped with a power supply 130, which is connected to a charging interface 140 and a switch component 150.

Specifically, the power supply 130 uses rechargeable batteries or dry batteries, and is connected to the fan 120, with a switch component 150 between the power supply 130 and the fan 120. When using rechargeable batteries, the power supply 130 can be connected to the charging interface 140, which can be connected to household power for charging the batteries. The switch component 150 can control the power state of the fan 120, thereby adjusting the working state of the fan 120.

As shown in Figures 1 and 2, the cushion cover 200 includes: a headrest cover 210 and a backrest cover 220 connected to the headrest cover 210, with the air guide assembly 100 installed on the backrest cover 220.

Specifically, when the headrest cover 210 is fitted over the headrest 300, the position of the backrest cover 220 corresponds to the passenger's back position, thus aligning the air guide assembly 100 installed on the backrest cover 220 with the passenger's back. In cases where the headrest height is adjustable, the position height of the air guide assembly 100 can correspond to the passenger's back position.

The safety seat provided by this embodiment of the disclosure includes: a seat body and the aforementioned backrest ventilation device, with the cushion cover 200 connected to the seat body. The cushion cover 200 can be installed on different models of seat bodies, and the safety seat possesses the technical effects of the aforementioned backrest ventilation device, which will not be repeated here.

Finally, it should be noted that: the above embodiments are only used to illustrate the technical solutions of this disclosure, and not to limit them; although the disclosure has been described in detail with reference to the foregoing embodiments, those skilled in the art should understand: they can still modify the technical solutions described in the foregoing embodiments, or replace part or all of the technical features with equivalents; and these modifications or replacements do not make the corresponding technical solutions deviate from the scope of the technical solutions of the embodiments of this disclosure.

## Claims

1. A backrest ventilation device, **characterized by** comprising: an air guide assembly (100) and a cushion cover (200), wherein the air guide assembly (100) is installed on the cushion cover (200);
the cushion cover (200) is used for detachable connection to the backrest and/or headrest (300).

2. The backrest ventilation device according to claim 1, **characterized in that** the cushion cover (200) is provided with a cover cavity, the cover cavity has an opening (201), and the air guide assembly (100) is installed inside the cover cavity.

3. The backrest ventilation device according to claim 1, **characterized in that** the air guide assembly (100) is installed inside the cushion cover (200) according to a preset fixing method, the preset fixing method includes sewing or adhesive bonding.

4. The backrest ventilation device according to claim 1, **characterized in that** a fitting piece (202) is connected to the cushion cover (200), and the fitting piece (202) is connected to the air guide assembly (100).

5. The backrest ventilation device according to claim 4, **characterized in that** the fitting piece (202) includes hook and loop fasteners or adhesive tape.

6. The backrest ventilation device according to claim 1, **characterized in that** a buckle component (203) is installed on the cushion cover (200), and the buckle component (203) is snap-fitted with the air guide assembly (100).

7. The backrest ventilation device according to claim 1, **characterized in that** the air guide assembly (100) includes: a fixing frame (110) and a fan (120), the fan (120) is installed on the fixing frame (110), and the fixing frame (110) is installed on the cushion cover (200).

8. The backrest ventilation device according to claim 7, **characterized in that** the fixing frame (110) is equipped with a power supply (130), the power supply (130) is connected to the fan (120), and a switch component (150) is provided between the power supply (130) and the fan (120).

9. The backrest ventilation device according to claim 1, **characterized in that** the cushion cover (200) includes: a headrest cover (210) and a backrest cover (220) connected to the headrest cover (210), and the air guide assembly (100) is installed on the backrest cover (220).

10. A safety seat, **characterized by** comprising: a seat body and the backrest ventilation device according to any one of claims 1-9, wherein the cushion cover (200) is connected to the seat body.
